# EUROPÄISCHE PATENTANMELDUNG

(11) **EP 0 793 362 A2**
(43) Veröffentlichungstag der Anmeldung: **03.09.1997**
(21) Anmeldenummer: 97102009.4
(22) Anmeldetag: 07.02.1997
(51) Int. Cl.: H04J 3/16

(54) **Datenübertragungsverfahren**

(30) Priorität: 29.02.1996 DE 19607725
(71) Anmelder: SIEMENS AKTIENGESELLSCHAFT, 80333 München (DE)
(72) Erfinder: Alger-Meunier, Michael, Dr., 85540 Haar (DE)

(57) **Zusammenfassung**

Datenübertragungsverfahren zur Übertragung von blockweise in eine Rahmenstruktur (16) eingebundener, diskretisierter Daten mittels einer getakteten Übertragungseinrichtung (1, 2, 3), wobei die in jeweils einem Block (20, 20', 20'', 20''') zusammengefaßte Datenmenge variabel ist und die Taktfrequenz der Übertragungseinrichtung (1, 2, 3) abhängig von dieser Datenmenge derart verändert wird, daß Rahmenstruktur und Rahmenlänge erhalten bleiben.

## Beschreibung

Die Erfindung betrifft ein Datenübertragungsverfahren zur Übertragung von blockweise in eine zeitliche Rahmenstruktur mit konstanter Rahmenlänge eingebundenen, binärcodierten Daten über eine getakte Übertragungseinrichtung.

Übertragungssysteme, die nach dem PCM-2-Verfahren arbeiten, nutzen die bei ISDN-Netzen (ISDN = Integrated Services Digital Network) gebräuchliche Übertragungstechnik, um auf einer Kupferdoppelader zwei Sprachkanäle von der Vermittlung zum Teilnehmer zu übertragen. Die beiden bei ISDN verfügbaren 64 kbit/s B-Kanäle werden über einen entsprechenden Adapter in der Vermittlung an zwei Ports einer analogen Leitungsabschlußschaltung und beim Teilnehmer an zwei analoge Telefone angeschlossen. Jedem der beiden Teilnehmer steht dabei entsprechend dem analogen Telefon ein 64 kbit/s-Kanal zur Verfügung. Jeder Teilnehmer kann demnach schnelle Faxgeräte ohne Leistungseinbuße verwenden.

Werden darüber hinaus die Sprachdaten komprimiert, dann steht die Kapazität einer ISDN-Übertragungseinrichtung einer noch größeren Zahl analoger Teilnehmer zur Verfügung. Darunter leidet jedoch die Übertragung bei schnellen Faxgeräten.

Die Übertragung nach HDSL-Standard (ETSI RTR/TM 3036) sieht eine Rahmenlänge von 6 ms vor, wobei bei der Übertragung Information von zwei Bitlängen auf ein quaternäres Symbol, ein sogenanntes Quat reduziert wird. Daraus resultiert eine Bitrate, die gleich der zweifachen Bandrate ist. Die nominale Länge eines HDSL-Rahmens ist 6 ms. Die Anzahl der Quats pro HDSL-Rahmen hängt von der jeweiligen Betriebsweise ab, wobei zwei Betriebsweisen (E1, T1) standardisiert sind. Die Daten innerhalb eines HDSL-Rahmens sind auf vier Blöcke, sogenannte Payload-Blöcke, mit jeweils 12 Gruppen, die mit einem Startbit (Z-Bit) beginnen und dem eine Anzahl von Payloadbits folgt, aufgeteilt. Da 4 x 12 Z-Bits in einer 6 ms Periode übertragen werden, ist zusätzlich ein 8 kb/s-Kanal verfügbar. Die Anzahl der nach jedem Z-Bit übertragenen Bits ist gleich der Anzahl von 64 kb/s-Kanälen, die über eine Leitung übertragen werden. Demzufolge umfaßt der Betriebsmodus T1 12 Bits nach jedem Z-Bit während der Betriebsmodus E1, dem der 8 kb/s-Kanal fehlt 18 Bits nach jedem Z-Bit aufweist.

Die durchschnittliche Länge eines HDSL-Rahmens beim Betriebsfall T1 ist 2352 Quats in 6 ms. Jeder einzelne Rahmen enthält entweder keine oder zwei Füllquats, was zu einer tatsächlichen Länge von 2351 Quats in 6-1/392 ms oder 2353 Quats in 6+1/392 ms führt. Die mittlere Länge des HDSL-Rahmens für den E1-Betriebsfall beträgt 3504 Quats in 6 ms. Jeder einzelne Rahmen umfaßt dabei keine oder zwei Füllquats, so daß sich eine tatsächliche Länge von 3503 Quats in 6-1/584 ms oder 3505 Quats in 6+1/584 ms ergibt. PCM-11-Systeme nutzen bei Übertragung nach HDSL-Standard 11 von 12 B-Kanälen für 11 analoge Teilnehmer und den 12ten B-Kanal für Signalisierungsinformationen. Die 11 Teilnehmer genießen dabei den vollen 64 kbit/s-Service. Problematisch ist dabei jedoch die Fernspeisung der Endgeräte. Die Datenrate steigt zwar durch die Verwendung des HDSL-Standards an, jedoch ist die übertragbare Energie zur Speisung der Endgeräte wegen des Längswiderstandes der Leitung begrenzt. So wäre beispielsweise bei einem PCM-11-System die 11fache Leistung einer Teilnehmerseite zuzüglich der Leistung, die das PCM-System selbst benötigt, zur Verfügung zu stellen. Demzufolge ergeben sich bei manchen Anwendungen Begrenzungen der Leitungslänge, die nur durch die verfügbare Speisespannung in der Vermittlung verursacht werden. Hier wären andere Datenraten und damit unterschiedliche Anzahlen von B-Kanälen - beispielsweise 5 oder 9 B-Kanäle - wünschenswert, um einerseits den Stromverbrauch zu minimieren und andererseits die Leitungslänge zu optimieren bzw. die maximale Anzahl von Teilnehmern an eine gegebene Verbindung anschließen zu können.

PCM-n-Systeme (4 ≤ n ≤ 11) mit voller 64 kbit/s-Datenrate pro Teilnehmer konnten bisher nur mittels Übertragung nach HDSL-Standard realisiert werden. Die restlichen Kanäle zwischen 12 bzw. 18 und n waren dabei ungenutzt. Der Stromverbrauch des Systems war demzufolge nicht optimal und die erzielbare Reichweite war nur diejenige des PCM-Systems mit 12 bzw. 18 Kanälen. Dabei sinkt mit steigender Datenrate die Reichweite.

Aufgabe der Erfindung ist es, ein Datenübertragungsverfahren sowie eine Anordnung zur Durchführung des Verfahrens anzugeben, bei dem diese Nachteile nicht auftreten.

Die Aufgabe wird durch ein Verfahren nach Anspruch 1 bzw. eine Datenübertragungseinrichtung nach Anspruch 10 gelöst. Ausgestaltungen und Weiterbildungen des Erfindungsgedankens sind Gegenstand von Unteransprüchen.

Das erfindungsgemäße Datenübertragungsverfahren zur Übertragung von blockweise in eine Rahmenstruktur eingebundene, diskretisierten Daten mittels einer getakten Übertragungseinrichtung sieht vor, daß die in jeweils einem Block zusammengefaßte Datenmenge variabel ist und daß die Taktfrequenz der Übertragungseinrichtung abhängig von dieser Datenmenge derart verändert wird, daß Rahmenstruktur und Rahmenlänge erhalten bleiben. Eine entsprechende, getaktete Datenübertragungseinrichtung zur Übertragung von blockweise in eine Rahmenstruktur eingebundenen, diskretisierten Daten enthält Mittel zum Verändern der Taktfrequenz der Übertragungseinrichtung in Abhängigkeit von der zu übertragenen, variablen Datenmenge eines Blocks enthält, wobei Rahmenstruktur und Rahmenlänge erhalten bleiben.

Wird die Datenrate verändert, so ergeben sich entsprechend mehr oder weniger B-Kanäle. Um die Rahmenstruktur dabei beizubehalten, wird die gesamte Übertragungseinrichtung, d. h. alle übertragungstechnisch relevanten Komponenten wie beispielsweise Echokompensator, Equalizer, Taktrückgewinnung u.s.w., mittels geeigneter Taktquellen entsprechend schneller oder langsamer betrieben. Da die Signalverarbeitung auf einer bestimmten Anzahl von Schritten pro Symbol basiert, ergibt sich daraus eine entsprechende Skalierung aller bei der Übertragung notwendigen Prozesse. Die Bruttodatenrate für n B-Kanäle beträgt n x 64 + 16 kbit/s. Da für PCM-n-Systeme im allgemeinen ein zusätzlicher Kanal für Signalisierungsinformationen benötigt wird, wird man insgesamt n+1 Kanäle zur Verfügung stellen. Das erfindungsgemäße Übertragungsverfahren ist insbesondere für nach HDSL-Standard arbeitende Übertragungseinrichtungen geeignet.

Dazu wird insbesondere vorgesehen, daß jeder Rahmen mit einem Synchronisationswort beginnt und/oder daß die Blöcke in Gruppen mit gleicher Anzahl von Blöcken zusammengefaßt sind. Darüber hinaus kann vorgesehen werden, daß jede Gruppe mit einem Gruppenstartwort beginnt, dem dann die jeweiligen Blöcke einer Gruppe folgen. Ebenso kann jeder Block mit einem Blockstartwort beginnen, dem dann eine bestimmte Anzahl von Nutzwörtern folgt. Die Anzahl der Nutzwörter pro Block kann dabei variabel sein und somit die gesamte Datenmenge bestimmen. Bevorzugt werden die Nutzworte eines Blocks jeweils einem pulscodemodulierten Übertragungskanal zugeordnet. Schließlich kann vorgesehen werden, daß ein Rahmen durch ein Abschlußwort beendet wird und/oder daß die zu übertragenen Daten quaternär codiert sind.

Die Erfindung wird nachfolgend anhand der in den Figuren der Zeichnung dargestellten Ausführungsbeispiele näher erläutert. Es zeigt:
- Figur 1: ein erfindungsgemäßes Datenübertragungssystem zur Durchführung des erfindungsgemäßen Datenübertragungsverfahrens und
- Figur 2: die bei dem Datenübertragungssystem nach Figur 1 verwendete Rahmenstruktur.

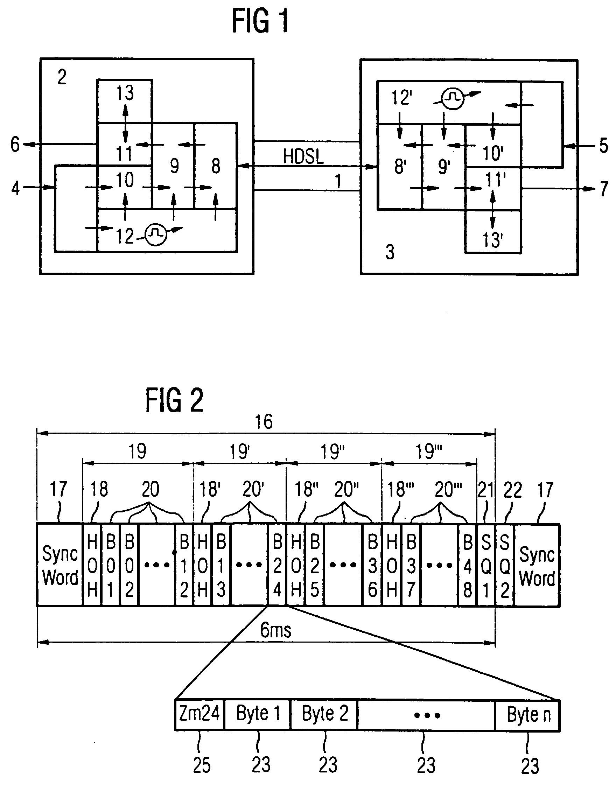

Die Übertragungseinrichtung des Ausführungsbeispieles nach Figur 1 enthält ein Übertragungsmedium 1, das beispielsweise durch eine Übertragungsleitung gegeben ist. Mit dem Übertragungsmedium 1 sind zwei Sende-Empfangs-Einrichtungen 2 und 3 gekoppelt. Die Sende-Empfangs-Einrichtungen 2 und 3 erhalten jeweils binär codierte Daten 4 bzw. 5, die sie aufbereiten und über das Übertragungsmedium 1 an die jeweils andere Sende-Empfangs-Einrichtung 3 bzw. 2 senden. Die jeweils durch die Sende-Empfangs-Einrichtungen 2 und 3 empfangenen Daten 6 bzw. 7 werden an entsprechende, in der Zeichnung nicht näher dargestellte Einheiten weitergegeben.

Die Übertragung von Daten über das Übertragungsmedium 1 erfolgt beim vorliegenden Ausführungsbeispiel nach HDSL-Standard. Dazu sind bei den Sende-Empfangs-Einrichtungen 2 und 3 unter anderem Echokompensatoren 8, 8', Equalizer 9, 9', sowie Mittel 10, 10' zum Erzeugen von HDSL-Rahmen aus den jeweils erhaltenen Daten 4 bzw. 5 vorgesehen. Außerdem sind Mittel 11, 11' vorhanden, die aus den erhaltenen HDSL-Rahmen die Daten 6 und 7 gewinnen.

Weiterhin enthalten die Sende-Empfangs-Einrichtungen 2 und 3 Mittel 12 bzw. 12' zur Erzeugung eines Taktsignals. Das jeweilige Taktsignal wird allen übertragungstechnisch relevanten Komponenten also unter anderem den Echokompensatoren 8 bzw. 8', den Equalizern 9 bzw. 9' sowie einer Einheit 13 bzw. 13' zur Taktrückgewinnung zugeführt. Die Frequenz des erzeugten Taktsignals ist dabei variabel und wird durch eine entsprechende Steuereinrichtung 14 bzw. 14' abhängig von der Menge der Daten 4 bzw. 7 eingestellt. Ändert sich die Datenmenge nicht häufig oder vorhersehbar, so kann anstelle der automatischen Einstellung mittels der Steuereinrichtung 14 bzw. 14' auch eine manuelle Einstellung der Mittel 12 erfolgen.

In Figur 2 ist ein mittels der Sende-Empfangs-Einrichtungen 2 und 3 zu übertragender HDSL-Rahmen 16 mit einer Rahmenlänge 6 ms dargestellt. Der Rahmen beginnt mit einem Synchronisationswort 17, dem ein Gruppenstartwort 18 folgt. Das Gruppenstartwort 18 leitet eine Gruppe 19 ein, die außer dem Gruppenstartwort 18 zwölf, diesem folgende Blöcke 20 aufweist. Der Gruppe 19 folgen vier weitere Gruppen 19', 19'', 19''', die jeweils durch ein Gruppenstartwort 18', 18'', 18''' eingeleitet werden und die ebenfalls jeweils zwölf Blöcke 20', 20'', 20''' aufweisen. Auf die letzte Gruppe 19''' folgen Füllworte 21 und 22.

Ein Block besteht dabei jeweils aus n Nutzwörtern 23, die beispielsweise jeweils die Länge von einem Bit haben. Am Anfang eines Blocks steht jeweils ein Z-Bit 24 zur Kennzeichnung des Anfangs eines Blocks. Die Anzahl n der Nutzworte 23 ist dabei variabel und bestimmt die Blocklänge und damit die zu übertragene Datenmenge. Um trotz unterschiedlicher Datenmenge und damit Blocklänge die Rahmenlänge von 6 ms und die Rahmenstruktur erhalten bleiben, wird entsprechend die Taktfrequenz bei den Mitteln 12 bzw. 12' entsprechend verringert oder erhöht, wobei mit steigender Datenmenge auch die Taktfrequenz erhöht wird. Da die Signalverarbeitung auf einer bestimmten Anzahl von Schritten pro Symbol basiert, ergibt sich eine entsprechende Skalierung aller Prozesse.

Insgesamt ergibt sich damit eine Übertragungsrate von n x 64 kb/s. Zusätzlich wird ein Überschuß von 8 kb/s bereitgehalten, der zur Synchronisation und zum Betrieb des Übertragungsmediums 1 notwendig ist. Außerdem werden 8 kb/s für einen transparenten Z-Kanal vorgesehen. Somit ist die übertragene Gesamtbitrate auf einer Paarleitung bei Übertragung nach HDSL-Standard n x 64 kb/s + 16 kb/s, wobei n der Anzahl von übertragenen B-Kanälen ist. Dadurch können Daten mit einer geeigneten Bandrate übertragen, wodurch der Leistungsverbrauch verringert und die Schleifenlänge vergrößert werden kann. Die Anzahl der B-Kanäle auf einem Leitungspaar kann dabei beispielsweise zwischen n = 4 und n = 18 gewählt werden. Jedoch sind auch in gleicher Weise andere Werte für n möglich. Der HDSL-Rahmen bleibt aber in jedem Fall 6 ms lang. Die übertragene Bandrate hängt jedoch von n ab.

## Patentansprüche

1. Datenübertragungsverfahren zur Übertragung von blockweise in eine Rahmenstruktur (16) eingebundenen, diskretisierten Daten mittels einer getakteten Übertragungseinrichtung (1, 2, 3),
**dadurch gekennzeichnet,**
daß die in jeweils einem Block (20, 20', 20'', 20''') zusammengefaßte Datenmenge variabel ist und daß die Taktfrequenz der Übertragungseinrichtung (1, 2, 3) abhängig von dieser Datenmenge derart verändert wird, daß Rahmenstruktur und Rahmenlänge erhalten bleiben.

2. Datenübertragungsverfahren nach Anspruch 1,
**dadurch gekennzeichnet,**
daß jeder Rahmen (16) mit einem Synchronisationswort (17) beginnt.

3. Datenübertragungsverfahren nach Anspruch 1 oder 2,
**dadurch gekennzeichnet,**
daß die Blöcke (20, 20', 20'', 20''') in Gruppen (19, 19', 19'', 19''') mit gleicher Anzahl von Blöcken (19, 19', 19'', 19''') zusammengefaßt sind.

4. Datenübertragungsverfahren nach Anspruch 3,
**dadurch gekennzeichnet,**
daß jede Gruppe (19, 19', 19'', 19''') mit einem Gruppenstartwort (18) beginnt, dem dann die jeweiligen Blöcke (20, 20', 20'', 20''') einer Gruppe (19, 19', 19'', 19''') folgen.

5. Datenübertragungsverfahren nach einem der Ansprüche 1 bis 4,
**dadurch gekennzeichnet,**
daß jeder Block (20, 20', 20'', 20''') mit einem Blockwort (25) beginnt, dem dann eine bestimmte Anzahl von Nutzworten (23) folgt.

6. Datenübertragungsverfahren nach Anspruch 5,
**dadurch gekennzeichnet,**
daß die Anzahl (n) der Nutzworten (23) pro Block (20, 20', 20'', 20''') variabel ist und die gesamte zu übertragene Datenmenge bestimmt.

7. Datenübertragungsverfahren nach Anspruch 6 oder 7,
**dadurch gekennzeichnet,**
daß die Nutzworte (23) eines Blocks (20, 20', 20'', 20''') jeweils einem pulscodemodulierten Übertragungskanal zugeordnet sind.

8. Datenübertragungsverfahren nach einem der Ansprüche 1 bis 7,
**dadurch gekennzeichnet,**
daß ein Rahmen (16) durch mindestens ein Füllwort (21, 22) beendet wird.

9. Datenübertragungsverfahren nach einem der Ansprüche 1 bis 8,
**dadurch gekennzeichnet,**
daß die zu übertragenden Daten quaternär codiert sind.

10. Getaktete Datenübertragungseinrichtung zur Übertragung von blockweise in eine Rahmenstruktur (16) eingebundenen diskretisierten Daten,
**dadurch gekennzeichnet,**
daß die in jeweils einem Block (20, 20', 20'', 20''') zusammengefaßte Datenmenge variabel ist und daß Mittel () zum Verändern der Taktfrequenz der Übertragungseinrichtung (1, 2, 3) in Abhängigkeit von dieser Datenmenge vorgesehen sind, wobei Rahmenstruktur und Rahmenlänge erhalten bleiben.
